Europäisches Patentamt

European Patent Office

Office européen des brevets

(19)

(11) **EP 1 065 902 A1**

(12) **DEMANDE DE BREVET EUROPEEN**

(43) Date de publication:
**03.01.2001 Bulletin 2001/01**

(51) Int Cl.⁷: **H04Q 7/30**, H04B 7/26

(21) Numéro de dépôt: **00401782.8**

(22) Date de dépôt: **22.06.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.06.1999 FR 9908374**

(71) Demandeur: **SAGEM S.A.**
**75116 Paris (FR)**

(72) Inventeur: **Frederic, Alain**
**95610 Eragny sur Oise (FR)**

(74) Mandataire: **Bloch, Gérard**
**2, square de l'Avenue du Bois**
**75116 Paris (FR)**

(54) **Réseau téléphonique local comportant une base de gestion de terminaux téléphoniques reliée à des embases de réception de combinés de réseaux téléphoniques cellulaires.**

(57) Le réseau téléphonique local comporte une base (1), reliée à des terminaux (2, 3) téléphoniques et reliée à des embases (4, 5), de réception de combinés téléphoniques (6, 7) de divers réseaux numériques de téléphonie cellulaire (8, 9) à débit déterminépar des liaisons numériques (60) à débit déterminé, la base (1) et les embases (4, 5) comportant des circuits pour transférer à travers la base (1) une communication d'un réseau cellulaire (8, 9) au réseau local, les circuits de transfert adaptant la transmission des signaux de communication dans l'un des deux réseaux (1-5; 8, 9) en fonction du débit de l'autre réseau (8, 9 ; 1-5).

FIGURE 1

EP 1 065 902 A1

**Description**

Un réseau téléphonique local comporte une base, reliée au réseau téléphonique commuté, et des terminaux téléphoniques qui peuvent établir une communication avec le réseau téléphonique commuté, à travers la base.

Comme réseau téléphonique local, on peut par exemple considérer un réseau radio à la norme DECT, destiné à équiper un local tel qu'une résidence personnelle ou un ensemble de bureaux. Un utilisateur d'un terminal radio DECT peut ainsi recevoir et lancer des appels sur le réseau téléphonique commuté.

Ces utilisateurs peuvent en outre disposer de combinés portables d'un réseau de radiotéléphonie cellulaire, par exemple le réseau GSM.

Si l'utilisateur d'un combiné GSM, rentré chez lui, dépose celui-ci dans une pièce éloignée, il risque de ne pas entendre la sonnerie d'arrivée d'appel. Cet appel entrant est perdu, alors qu'il aurait abouti, par sonnerie des terminaux DECT, s'il avait été lancé vers la base, à travers le réseau téléphonique commuté. En sens inverse, cet utilisateur devra se déplacer jusqu'à son combiné GSM s'il veut appeler au coût minimal, et donc sans passer par le réseau commuté, un abonné du réseau cellulaire GSM. Bref, les divers réseaux téléphoniques sont exploités séparément et cette absence d'exploitation intégrée engendre une perte d'efficacité.

La présente invention vise à éviter les inconvénients évoqués ci-dessus.

A cet effet, l'invention concerne un réseau téléphonique local comportant une base, reliée à des terminaux téléphoniques du réseau local et agencée pour être reliée à un réseau téléphonique filaire, et des embases, de réception de combinés téléphoniques de divers réseaux numériques de téléphonie cellulaire à débit déterminé, réseau local dans lequel la base est reliée aux embases par des liaisons numériques à débit déterminé et la base et les embases comportent des moyens pour transférer à travers la base une communication d'un réseau cellulaire au réseau local et inversement, les moyens de transfert de la base et des embases étant agencés pour adapter la transmission des signaux de communication dans l'un des deux réseaux en fonction du débit de l'autre réseau.

Ainsi, un appel d'un réseau cellulaire arrivant sur un combiné placé dans une embase du réseau local est relayé jusqu'à la base et celle-ci se substitue fonctionnellement à ce combiné puisque, la transmission des signaux de communication étant adaptée entre les deux réseaux, la base peut communiquer à travers le réseau cellulaire avec l'appelant sans risque de perte de signaux de communication, ce qui serait, au moins, une source de bruits récurrents gênant la conversation. L'appel entrant peut alors être prolongé jusqu'aux terminaux reliés à la base. C'est alors, en définitive, le terminal qui répond qui se substitue au combiné du réseau cellulaire associé à l'embase. En sens inverse, l'utilisateur d'un terminal de la base peut lancer un appel sortant sur le réseau cellulaire de son choix, à travers un combiné, et ainsi optimiser les coûts de communication. Le réseau local de l'invention constitue ainsi un réseau modulaire vis-à-vis des divers réseaux cellulaires, les combinés de ceux-ci associés aux embases constituant des modules ou passerelles de raccordement du réseau local à ces réseaux.

Dans une forme de réalisation, les moyens de transfert sont agencés pour asservir le débit d'une des liaisons numériques, reliant la base à une embase, sur le débit du réseau cellulaire du combiné de l'embase.

Le réseau local et le réseau cellulaire forment ainsi un réseau global à terminaux synchrones.

Dans une autre forme de réalisation, les moyens de transfert des embases sont agencés pour adapter les signaux de communication reçus d'un des deux réseaux, local et cellulaire, en fonction du débit de l'autre réseau.

On adapte ainsi les signaux eux-mêmes, sans nécessité d'adapter entre eux les débits des deux réseaux reliés.

Dans encore une autre forme de réalisation, les moyens de transfert des embases sont agencés pour émettre, vers le réseau cellulaire, des commandes de régulation d'émissions de paquets de données provenant dudit réseau.

On adapte ainsi le débit moyen de l'émetteur des signaux reçus, sans devoir adapter le débit instantané de l'un des réseaux sur l'autre.

L'invention sera mieux comprise à l'aide de la description suivante de deux formes de réalisation du réseau téléphonique local de l'invention en référence au dessin annexé, sur lequel

- la figure 1 est un schéma par blocs du réseau local,
- la figure 2 est un schéma par blocs de circuits de communication d'une embase de réception d'un combiné de radiotéléphonie, dans la première forme de réalisation du réseau local,
- la figure 3 illustre, en fonction du temps t, le traitement d'échantillons de signaux phoniques par les circuits de la figure 2,
- la figure 4 est un schéma par blocs de circuits de communication dans une voie temporelle d'une base du réseau local, dans la deuxième forme de réalisation du réseau local, et
- la figure 5 est un schéma par blocs de circuits de communication dans une voie temporelle d'une embase de réception d'un combiné de radiotéléphonie dans la deuxième forme de réalisation.

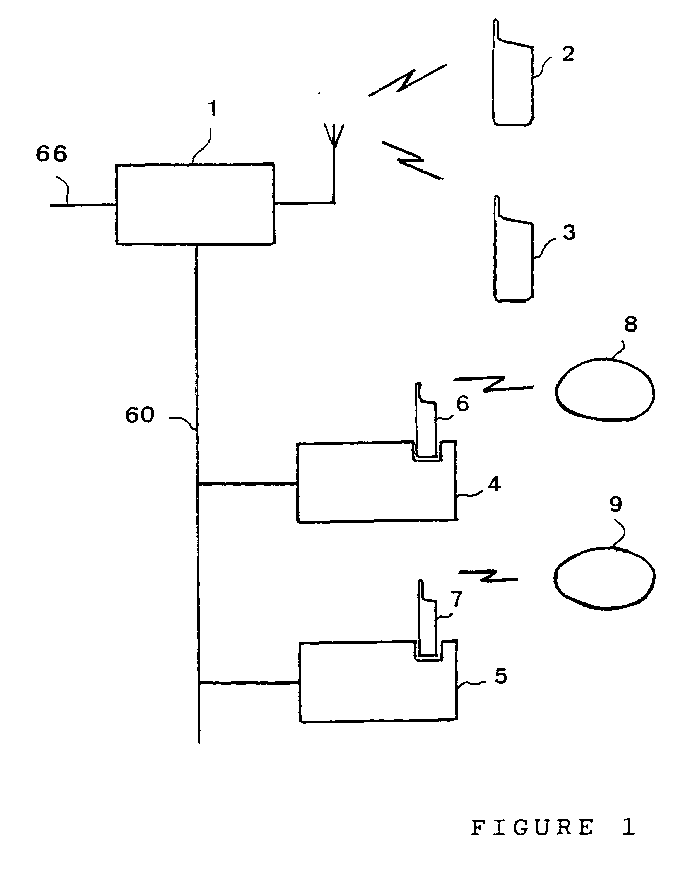

Le réseau téléphonique local de l'invention représenté sur la figure 1 comporte une base 1 reliée à une ligne 66 d'un réseau téléphonique filaire, ici le réseau téléphonique commuté, et à une pluralité de terminaux téléphoniques 2, 3 du réseau local.

Dans cet exemple, il s'agit d'une base de réseau local à la norme DECT, reliée par radio aux terminaux 2, 3. La base 1 est en outre reliée à une autre pluralité d'équipements constitués d'embases 4, 5 de réception de combinés téléphoniques portables 6, 7 de réseaux de radiotéléphonie cellulaire 8, 9. Dans cet exemple, chaque embase 4, 5 comporte un chargeur de batterie 65 pour recharger la batterie du combiné 6, 7 reçu.

Sur la figure 1, le combiné 6 du réseau 8, ici GSM, est logé dans l'embase 4 et le combiné 7 du réseau 9, ici DCS, est logé dans l'embase 5. Il peut être prévu qu'une même embase 4, 5 puisse recevoir indifféremment des combinés 6, 7 de réseaux 8, 9 différents.

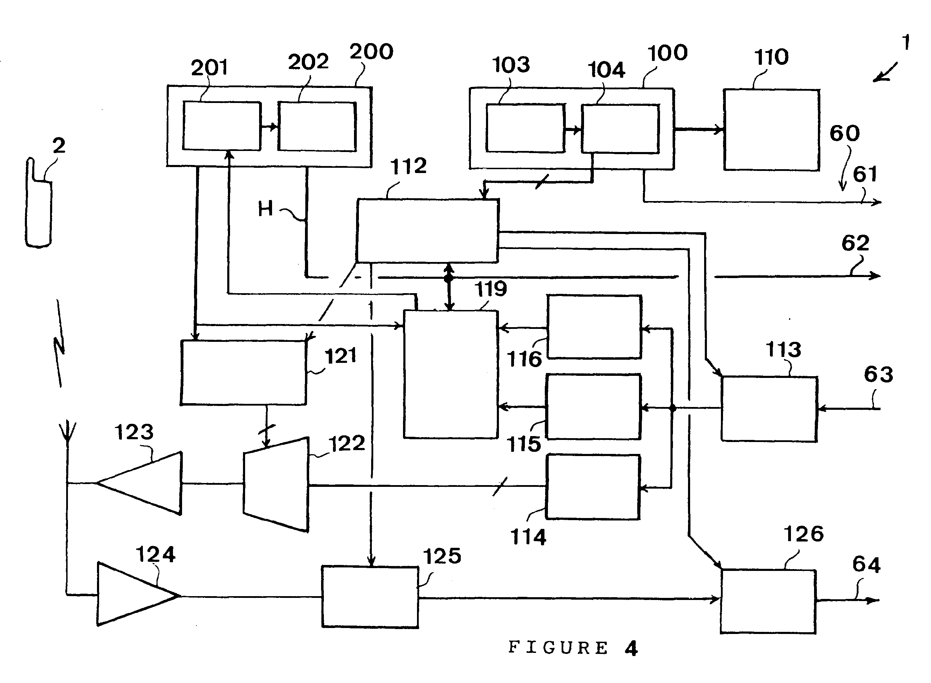

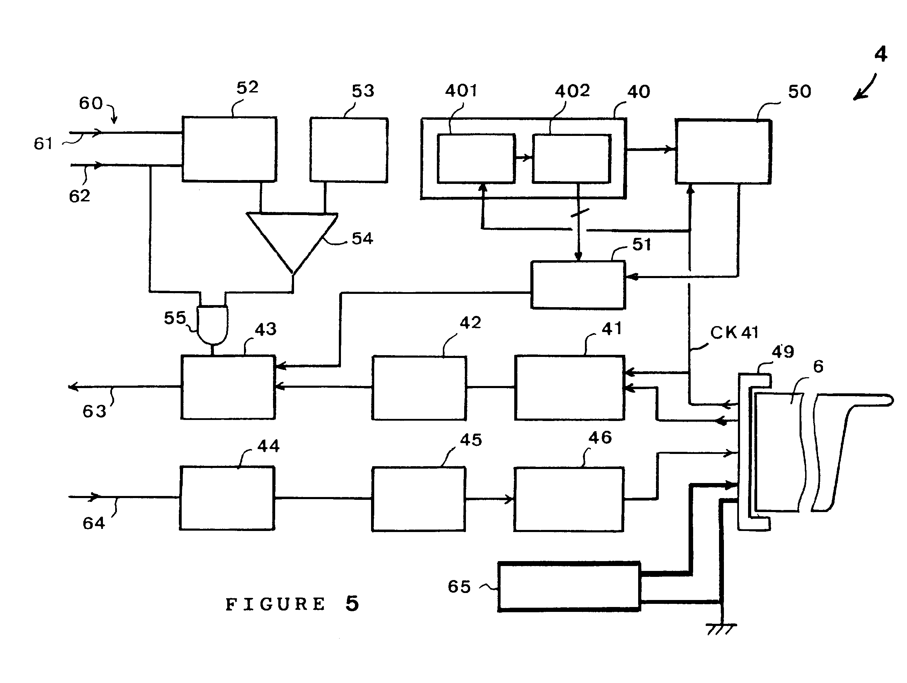

La base 1 est reliée à toutes les embases 4, 5, ici par un bus numérique 60 comportant quatre fils 61 à 64 (fig. 4 et 5), qui transmet, de façon bidirectionnelle, des trames DECT. Le bus 60 comporte trois fils 61, 62, 64 d'émission de signaux par la base 1 vers les embases 4, 5 et un fil 63 de réception, par la base 1, de signaux phoniques de communication des embases 4, 5. Le fil 64 est l'homologue du fil 63, pour la transmission en sens opposé de signaux phoniques de communication. Le fil 61 sert à la transmission d'un signal d'horloge de synchronisation trame, sous forme d'une impulsion émise à une fréquence de répétition de 8 kHz, tandis que le fil 62 sert à la transmission d'un signal H de synchronisation bit.

La base 1 peut, à travers le bus 60, les embases 4, 5 et les combinés 6, 7, établir (ou recevoir) des communications téléphoniques avec les réseaux 8 et 9. Ces communications peuvent concerner la parole ou tous autres signaux phoniques, tels que des signaux de modulation d'un modem, tout aussi bien que la transmission de données avec des terminaux 2, 3 prévus à cet effet. Les terminaux DECT 2, 3 sont ainsi reliés, par le réseau local radio DECT, aux réseaux 8 et 9.

On rappellera que la norme DECT prévoit une trame de 24 voies temporelles pour des transmissions numériques. Les signaux phoniques des microphones des terminaux 2, 3 sont numérisés dans ceux-ci, à une fréquence nominale d'échantillonnage de 8 kHz fournie par la base 1 et les échantillons, d'un octet chacun, sont stockés provisoirement et transmis par rafales lorsque la voie temporelle affectée au terminal 2, 3 correspond à l'instant courant.

Pour ce qui concerne les réseaux GSM 8 et DCS 9, les signaux phoniques analogiques engendrés dans les combinés comme 6 et 7 sont de même échantillonnés dans ceux-ci à une fréquence nominale de 8 kHz sous la commande en fréquence du réseau 8, 9 considéré, pour être ensuite comprimés et émis par paquets dans celui-ci. Dans la suite de l'exposé, on ne considère, dans un but de clarté, que le réseau GSM 8.

Dans l'un et l'autre des réseaux, local DECT et GSM 8, en réception terminale, des circuits à mémoire tampon stockent les rafales ou paquets d'octets reçus du réseau considéré et alimentent en octets, à 8 kHz, un décodeur commandant un haut-parleur.

Dans le cas présent, le combiné 6 n'est pas en position terminale mais est un relais entre le réseau local DECT et le réseau GSM 8, qui ne sont pas synchronisés entre eux. Leurs fréquences d'échantillonnage ne sont pas strictement égales et glissent l'une par rapport à l'autre. De ce fait, un échantillon émis par un réseau DECT, GSM 8, vers l'autre (GSM 8, DECT) risque parfois de ne disposer dans ce dernier d'aucun emplacement, physique ou temporel, de réception de l'échantillon, si le réseau récepteur est le plus lent. S'il est le plus rapide, ce sont deux échantillons qui sont parfois requis.

**Transmission en temps réel d'échantillons de signaux phoniques, par adaptation des échantillons.**

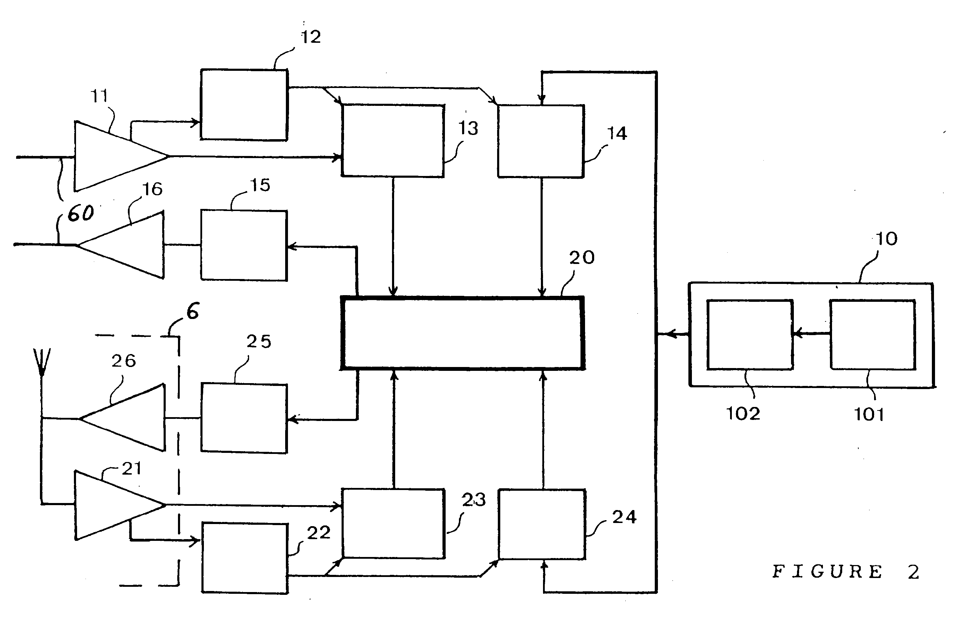

La figure 2 représente une première forme de réalisation du réseau téléphonique local, dans laquelle les circuits de l'embase 4 bi-standard DECT-GSM relient les deux réseaux, local DECT et cellulaire GSM 8, sans perte ou redoublement d'échantillons de signaux de phonie lors de leur transfert d'un réseau à l'autre. A cette fin, l'embase 4 adapte ces échantillons en fonction des rythmes ou vitesses de transmission des deux réseaux, cellulaire 8, 9 et local DECT, ces deux rythmes restant indépendants l'un de l'autre. Au contraire, dans l'autre exemple de réalisation des figures 4 et 5, on verra plus loin que, dans ce même but, on asservit le rythme local sur le rythme cellulaire, sans modifier les signaux transmis, qui sont dans ce cas des bits de données quelconques, de phonie ou informatiques.

Un circuit 11, récepteur de signaux de communication, ici phoniques, de parole ou autres, issus de la base 1 par le fil 64 dans une voie temporelle DECT, asservit, à partir des signaux de bits reçus dans les voies temporelles, la phase d'un circuit oscillateur 12 qui commande la mémorisation des bits, issus du circuit récepteur 11, dans un registre tampon 13. Dans le circuit récepteur 11, des circuits classiques, non représentés, comportent un compteur, à 24 états, de voies temporelles commandant une entrée parallèle d'un comparateur de sélection de voie temporelle recevant, sur son autre entrée, un numéro de voie temporelle affectée à l'embase 4 et donc au combiné 6. Le comparateur fournit au circuit oscillateur 12 un signal qui en contrôle la sortie et précisément l'inhibe en dehors de la période de la voie temporelle considérée, pour ne valider la commande de mémorisation issue du circuit VCO 12 que pendant la durée de la voie temporelle réservée au combiné 6. Cette même commande produit aussi la mémorisation, dans un registre tampon horodateur 14, de l'état des sorties des circuits d'horloge 10, comportant un oscillateur 101 commandant des compteurs diviseurs de fréquence 102 fournissant une valeur représentant l'instant courant.

Les sorties des registres tampon 13 et 14 sont reliées à un bloc de calcul commun 20 qui commande un émetteur 16 relié au fil 63 à travers un registre tampon 15 commandé, de façon non représentée, par un signal d'horloge fourni par le circuit VCO 12. Les circuits 11, 13, 15 et 16 permettent l'échange d'échantillons ou mots de code entre le réseau local DECT et les autres circuits de la figure 2.

Côté réseau GSM 8, l'ensemble embase 4 - combiné 6 comporte un ensemble 21-26 de circuits homologues de l'ensemble de circuits 11-16, et qui portent chacun la même référence que leur circuit homologue mais avec la dizaine 2. On ne répètera donc pas la description ci-dessus. De même, les circuits GSM classiques de mise en paquets et de réception et d'extraction de données des paquets reçus, pour la transmission radio, sont bien connus et ne sont donc pas ici décrits. Les circuits 21 et 26, représentant très schématiquement le combiné 6, sont reliés aux circuits 22 et 25 de l'embase 4 par un connecteur non représenté (réf. 49 sur la figure 5). Les deux ensembles 11-16, 21-26 et le bloc de calcul commun 20 permettent un échange bi-directionnel de signaux numériques entre les deux réseaux DECT et GSM 8. Pour simplement une transmission mono-directionnelle, du réseau local DECT vers le réseau GSM 8, le registre tampon 23 de mémorisation des échantillons de parole provenant du réseau GSM 8 serait inutile.

La transmission des échantillons du réseau local DECT, de sortie, au réseau GSM 8, d'entrée, s'effectue de la façon suivante.

Pour relier les deux réseaux de transmission DECT et GSM 8, à deux rythmes d'échantillonnage différents, de données numériques de phonie et transmettre les données de phonie du réseau de sortie DECT à l'autre réseau d'entrée 8,

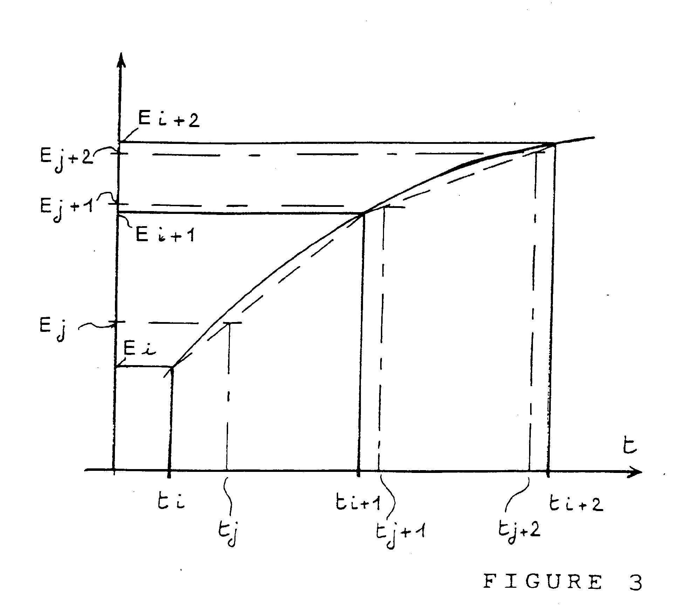

- on saisit les valeurs Ei, Ei+1 (fig. 3) et les instants ti, ti+1 des échantillons de phonie du réseau de sortie DECT, ceci dans respectivement les mémoires tampon 13 et 14,
- on saisit les instants tj, tj+1 des échantillons à transmettre sur le réseau d'entrée GSM 8, ces instants tj, tj+1 étant mémorisés dans la mémoire tampon horodatrice 24,
- pour chaque instant tj, tj+1 d'un échantillon à transmettre du réseau d'entrée GSM 8, on saisit, dans le bloc de calcul 20, les deux valeurs Ei, Ei+1 des deux échantillons du réseau de sortie DECT de part et d'autre,
- on détermine la valeur Ej de l'échantillon à transmettre par interpolation des deux valeurs des échantillons de sortie Ei, Ei+1, et
- on transmet les échantillons Ej sur le réseau d'entrée GSM 8, à travers le registre tampon 25 et l'émetteur radio 26 du combiné 6.

Comme le montre la figure 3, trois valeurs d'échantillons Ei, Ei+1, Ei+2 qui sont saisies successivement correspondent à l'amplitude d'un signal de phonie, ici de parole, qui a été échantillonné à 8 kHz dans le terminal 3 et numérisé puis émis vers le combiné 6 à travers la base 1. Les instants d'arrivée de chaque bit de signal de parole dans ce dernier sont déterminés avec précision par les circuits d'horloge 10 dont l'oscillateur fonctionne à une dizaine de MHz, donc à plusieurs ordres de grandeur au-dessus de la fréquence d'échantillonnage de 8 kHz.

Dans cet exemple, les deux réseaux DECT et GSM 8 fonctionnent chacun en partage de temps, comme indiqué, avec des trames dans lesquelles les terminaux 2 et 3 et les embases 4, 5 ne disposent que d'un intervalle de temps pour transmettre les échantillons. De ce fait, si la vitesse moyenne de transmission des octets d'échantillons est bien de 8 kHz (à une compression près des signaux transmis), la vitesse instantanée est nettement plus élevée et sensiblement égale à la vitesse moyenne multipliée par l'inverse du facteur de forme (temps d'une voie temporelle/ durée trame). Ce facteur de forme est de 24 dans le réseau DECT et, du fait que chaque échantillon est codé sur 8 bits, la vitesse de transmission bit est de l'ordre de grandeur de 200 fois 8 kHz, donc environ 1,6 Mb/s.

On conçoit que, si l'on intégrait, avec les circuits 11, 16 et 21, 26 du combiné 6, les circuits classiques d'adaptation de débit, pour transformer les paquets ou rafales à haut débit reçus en un flux continu d'octets à 8 kHz, soit 64 kb/s (et inversement en émission), les circuits d'horloge 10 pourraient être prévus à plus basse fréquence, par exemple 1 MHz.

Les circuits d'horloge 10 ont donc une fréquence bien supérieure à celle de la fréquence de transmission des bits et peuvent ainsi déterminer avec précision la phase relative entre les signaux des deux réseaux DECT, GSM 8, phase qui glisse en permanence. Comme chaque réseau DECT, GSM 8 asservit en fréquence et phase, en émission et réception, ses terminaux ou combinés 2, 3, 4, 5 et respectivement 6, la détection précise de la phase des échantillons Ej reçus du réseau GSM 8 (ou de tout autre signal comportant cette information de phase) dans le terminal 2 fournit la synchronisation de phase voulue pour l'émission, à l'instant voulu, d'échantillons sur le réseau GSM 8. Il peut d'ailleurs être prévu de synchroniser les circuits d'horloge 10 sur l'un des réseaux DECT, GSM 8, qui aura donc une phase relative fixe par rapport aux circuits d'horloge 10, et seul l'autre réseau aura une phase relative variable.

Le registre 13 et le registre horodateur 14 contiennent une suite d'échantillons Ei, Ei+1, Ei+2 et une suite correspondante de leurs instants, associés, de réception ti, ti+1, ti+2. Le registre horodateur 24 contient la suite des valeurs tj, tj+1, tj+2 des instants auxquels le réseau d'entrée GSM 8 doit recevoir des échantillons.

Le bloc de calcul 20 calcule par interpolation, pour l'instant tj, une valeur d'échantillon intermédiaire Ej à partir des deux valeurs d'échantillons Ei et Ei+1 d'instants ti et ti+1 qui sont temporellement situées de part et d'autre, selon la formule :

$$Ej = \frac{Ei\,(ti{+}1 - tj) + (Ei{+}1)\,(tj - ti)}{ti{+}1 - ti}$$

le dénominateur étant sensiblement fixe et valant une période du 8 kHz d'échantillonnage, soit 125 µs.

De même, pour l'instant tj + 1 :

$$Ej + 1 = \frac{(Ei + 1)\,(ti + 2 - tj + 1) + (Ei + 2)\,(tj + 1 - ti + 1)}{ti + 2 - ti + 1}$$

Et pour l'instant tj + 2 :

$$Ej + 2 = \frac{(Ei + 1)\,(ti + 2 - tj + 2) + (Ei + 2)\,(tj + 2 - ti + 1)}{ti + 2 - ti + 1}$$

La figure 3 illustre le cas pour lequel le réseau GSM 8, et le réseau local DECT sont plésiochrones, c'est-à-dire de fréquences qui ne sont que peu différentes, par exemple de 1 % au maximum. Cette valeur a été volontairement exagérée sur la figure 3. Le réseau GSM 8 a ici une fréquence d'échantillonnage de 8030 Hz, supérieure, par exemple de 50 Hz, à celle du réseau DECT (7980 Hz), si bien qu'ici les deux instants tj+1 et tj+2 se trouvent encadrés par les deux mêmes instants ti+1 et ti+2. Grâce au procédé ci-dessus, cela n'induit aucun défaut quant à la fourniture du nombre exact d'échantillons nécessaires au réseau d'entrée GSM 8.

Les calculs ci-dessus, pour les instants tj et suivants, sont évidemment effectués après l'instant ti+1 qui suit l'instant tj. De ce fait, le bloc de calcul 20 doit parfois attendre, à partir de l'instant tj de l'échantillon intermédiaire Ej, pratiquement une période de 125 µs pour disposer de l'instant suivant dans l'autre suite (cf. tj+1 qui précède ti+2). La figure 3 montre en outre que, comme tj+2 précède aussi ti+2 dans le cas particulier représenté, on ne peut émettre l'échantillon intermédiaire Ej + 1 à l'instant tj+2 puisque cet échantillon Ej + 2 n'a pu encore être calculé. Compte tenu en outre du temps de calcul d'interpolation, le temps de traversée de l'embase 4 est de deux périodes, soit 250 µs, c'est-à-dire que l'échantillon Ej est émis (26) à l'instant tj+2. Le bloc de calcul 20 se synchronise, pour déterminer la valeur des échantillons intermédiaires Ej à transmettre, sur les instants saisis tj de ceux-ci et fournit l'échantillon Ej au registre 25 entre l'instant tj+1 et tj+2, cet échantillon Ej étant lu et émis par l'émetteur 26 à l'instant tj+2.

Afin d'améliorer le résultat d'interpolation, linéaire ci-dessus, il peut être prévu de tenir compte d'autres échantillons de sortie précédents Ei-1, Ei-2 pour calculer l'échantillon intermédiaire d'entrée Ej, c'est-à-dire d'effectuer un filtrage numérique pour prendre en compte la dérivée seconde de la fonction continue (signal phonique analogique d'origine) représentée par les valeurs discrètes Ei et ainsi déterminer une valeur d'interpolation plus représentative de ce signal, prenant en compte sa courbure.

Les circuits de traitement d'échantillons de la figure 2 peuvent servir à toute transmission de signaux analogiques numérisés qui fait appel à deux liaisons de données en série à rythmes ou débits mutuellement asynchrones, quels que soient les supports physiques de ces liaisons.

**Transmission de données en paquets, avec régulation du flux des paquets.**

Dans le cas de transmission de paquets de données numériques entre un réseau externe 8, 9 et un terminal 2, 3, à travers un combiné 6, 7 et le bus 60, donc avec cette fois un flux discontinu de bits autres que des signaux phoniques en mode circuit, il est prévu d'effectuer dans l'embase 4, 5 une adaptation des débits numériques moyens de transmission des données aux rythmes des deux réseaux à relier, local DECT et externe 8, 9. En pareil cas, pour une transmission de données depuis un combiné cellulaire distant, non représenté, du réseau GSM 8, à travers le réseau GSM 8, le combiné récepteur 6, l'embase 4, le bus 60, la base 1, jusqu'au terminal DECT 2 par exemple, le bloc de calcul 20 détermine le volume de remplissage du registre tampon 23 et asservit, par un protocole de régulation de débit approprié, le combiné GSM émetteur distant pour que le tampon 23 ne déborde pas. Pour cet asservissement, le bloc de calcul 20 émet sur le réseau GSM 8, vers le terminal cellulaire distant, à travers les circuits 25, 26, des commandes de blocage de toute nouvelle émission de paquet. Le terminal cellulaire distant diffère alors toute nouvelle émission de paquet pendant une durée déterminée après réception d'une telle commande ou, en variante, attend de recevoir de même une autorisation explicite d'émettre à nouveau. Un éventuel débordement de capacité négative, vidant le registre tampon 23, n'a pas d'effet néfaste, dans la mesure où le tampon 23 a une capacité suffisante pour recevoir tout un paquet de données, qui n'est retransmis qu'ensuite, d'un seul tenant, vers le terminal 2, donc sans risque de coupure de ce paquet par manque des données de fin de paquet à émettre dans le terminal 2 du réseau DECT.

**Transmission d'un flux continu de données, avec asservissement du rythme du réseau DECT sur celui du réseau cellulaire.**

Pour la deuxième forme de réalisation, les circuits de la base 1 (fig. 4) et d'une embase (fig. 5) comme celle référencée 4, pour relier la base 1 à l'embase 4, vont maintenant être exposés plus en détails. Comme expliqué ci-dessous, les embases 4, 5 sont reliées à la base 1 et comprennent, chacune, des circuits 40-46, 49-55 pour transférer, à travers la base 1, une communication d'un réseau cellulaire 8, 9 au réseau local et inversement. Comme dans la première forme de réalisation, la base (1) et les embases (4, 5) comportent des circuits de transfert de communication pour adapter la transmission des signaux de communication dans l'un des deux réseaux, DECT et cellulaire 8, 9, en fonction du débit de l'autre réseau 8, 9 ou DECT. En particulier dans cet exemple, la base 1 comporte des circuits 112, 116 et 119 à 126 pour être asservie sur le réseau cellulaire 8, 9 de la communication à transférer à travers l'embase 4, 5 correspondante.

La base 1 comporte des circuits d'horloge 100 rythmant le fonctionnement d'une unité centrale ou microprocesseur 110 relié à l'ensemble des circuits, par des liaisons non représentées, pour en gérer le fonctionnement. Les circuits 100, 110 sont des circuits communs de la base 1, qui gèrent les autres circuits représentés sur la figure 4, spécifiques à la liaison avec l'embase spécifique 4, et gèrent aussi des circuits homologues pour les liaisons avec les autres embases, comme celle référencée 5.

Les circuits d'horloge 100 comportent un oscillateur à quartz 103 et des diviseurs numériques de fréquence 104 en aval, sous forme de compteurs fournissant en particulier un signal de synchronisation trame, sous forme d'une impulsion émise à une fréquence de répétition de 8 kHz. Ce signal est émis sur le fil 61 du bus 60.

Les compteurs 104 commandent un décodeur 112 qui décode l'état global de cinq sorties des compteurs 104 qui présentent un cycle de répétition comportant 24 états. Chacun de ces états définit un intervalle de temps, ou voie temporelle, dans la trame de fréquence de répétition 8 kHz.

A chaque voie temporelle est affecté un registre de réception comme celui référencé 113, relié au fil 63 de réception de données du bus 60 et un registre d'émission comme celui référencé 126 pour émettre des données de communication, de phonie ou informatiques, sur le fil 63.

Le registre d'entrée 113 est relié en sortie à trois mémoires tampon 114, 115, 116 associées, du genre FIFO (premier entré, premier sorti) pour stocker des contenus successifs du registre d'entrée 113. Chaque mémoire tampon 114-116, par exemple de type mémoire à accès aléatoire RAM, permet de ranger les bits de trois champs spécifiques respectifs contenus dans chaque bloc de données transmis dans la voie temporelle considérée. Les trois champs correspondent respectivement à un champ de données utiles représentant des échantillons d'un signal vocal numérisé, rangé dans la mémoire 114, un champ horodateur, en mémoire 115, indiquant l'instant auquel ces données utiles vocales ont été reçues par radio par le combiné 6 en provenance de son réseau radio 8, et un champ d'indication de longueur, rangé en mémoire 116, spécifiant le nombre N d'échantillons, ici d'un octet chacun, du signal phonique du champ en mémoire 114.

La mémoire 115 à champ horodateur et la mémoire 116 sont reliées en sortie à un bloc de circuits de calcul 119 commandant la fréquence de circuits d'horloge 200 à oscillateur asservi 201, du genre à asservissement de la fréquence par une tension de commande, VCO, ou programmable en fréquence. L'oscillateur asservi 201 commande des compteurs diviseurs de fréquence 202, fournissant des signaux d'horloge aux rythmes voulus. Les circuits d'horloge 200 fournissent en particulier un signal d'horloge H à environ 1,5 MHz, représentant la fréquence, asservie, de transmission des bits dans les voies temporelles, et appliqué au fil 62, de synchronisation bit, du bus 60. Le signal H de synchronisation bit est aussi appliqué à une entrée de verrouillage du décodeur 112. De ce fait, le décodeur 112 reproduit, sur la sortie sélectionnée par les compteurs 104 de voie temporelle, le signal d'horloge H et fonctionne ainsi en aiguilleur pour ce dernier, pour activer successivement, par des rafales du signal d'horloge H, les ensembles des circuits (fig. 2) de la base 1 relatifs aux diverses embases 4, 5. Le décodeur 112 commande ainsi, pour la liaison allant du fil 63 au terminal 2, 3, l'avance du registre 113 et celle d'un compteur 121 commandant les entrées d'adressage d'un multiplexeur 122 relié, en entrée de données, à la mémoire 114 de données utiles et commandant un circuit émetteur radio 123 du réseau local, ainsi relié aux divers terminaux 2, 3. Le signal d'horloge H, ou tout autre signal représentant la fréquence des circuits d'horloge 200, est aussi reçu par le bloc de calcul 119.

Les données utiles de la mémoire 114 sont ainsi émises par radio vers les terminaux 2, 3 pendant l'intervalle de temps réservé à la voie temporelle considérée dans la trame DECT à 24 voies. Le temps de transit à travers la base 1 représente ici la durée d'une trame DECT.

En sens inverse, d'un terminal 2, 3 vers l'embase 4 ici considérée, un circuit radio de réception 124 reçoit les données émises par un terminal 2, 3 dans la voie temporelle considérée et les transmet à un registre à décalage d'entrée 125 qui lui-même les retransmet au registre d'émission 126 pour leur émission sur le fil 64. Le décodeur 112 applique de même le signal d'horloge H aux circuits 125 et 126 dans la voie temporelle voulue. Les circuits radio 123 et 124 sont communs et partagés en temps entre toutes les voies temporelles DECT et donc utilisés par d'autres ensembles de circuits pour d'autres embases (5), ensembles semblables à celui représenté en fig. 4 mais affectés à d'autres voies temporelles et qui ont aussi un accès en temps partagé au bus 60.

Les circuits de transmission de données de l'embase 4 ici considérée, reliés à l'ensemble de circuits ci-dessus de la base 1 par le bus 60, vont maintenant être décrits (fig. 5).

L'embase 4 comporte des circuits d'horloge 40 rythmant le fonctionnement d'un microprocesseur 50, les circuits 40 comportant un oscillateur 401, commandant des compteurs 402 diviseurs de fréquence, et asservi en fréquence par le réseau 8, comme expliqué plus loin. Le microprocesseur 50 gère les circuits de l'embase 4 par des liaisons non toutes représentées.

L'embase 4 comporte, d'un côté, le connecteur 49 de raccordement à un connecteur homologue du combiné 6 et, de l'autre côté, est reliée aux quatre fils 61, 62, 63 et 64 du bus 60. Le connecteur 49 est relié au fil 63 par une chaîne de circuits comportant, dans l'ordre, un registre à décalage 41 de réception de données utiles de parole ou autres signaux de communication provenant du combiné 6, un circuit 42 de décompression des données utiles et un registre à décalage 43 d'émission en sortie côté bus 60, commandant le fil 63. En sens opposé, un registre 44 d'entrée en réception côté bus 60, relié en entrée au fil 64, alimente en données un circuit 45 de compression de données utiles, qui lui-même est relié en sortie au connecteur 49 à travers un registre à décalage 46 d'émission en sortie côté combiné 6.

Les compteurs 402 des circuits d'horloge 40 sont reliés en sortie à des entrées parallèles d'un registre horodateur 51 lui-même relié en sortie au registre 43.

Le chargement série du registre 41 s'effectue sous la commande d'un signal d'horloge CK41, fourni par le combiné 6 à travers le connecteur 49, et appliqué en outre à une entrée du microprocesseur 50 et à une entrée d'asservissement en fréquence de l'oscillateur 401. Le signal d'horloge CK41 est produit dans le combiné 6 par un circuit asservi en fréquence par le réseau cellulaire 8.

Les états des sorties des compteurs 402, qui représentent l'instant courant et qui sont appliqués aux entrées parallèles du registre horodateur 51, peuvent être recopiés dans celui-ci, sous la commande du microprocesseur 50, par la liaison parallèle représentée.

Un compteur 52 à cinq bits est relié, en entrée de comptage, au fil 62 d'horloge bit et au fil 61 d'horloge trame, qui le synchronise sur le front montant du signal d'horloge trame. Le compteur 52 présente une succession de 24 états différents par trame et fournit ainsi le numéro de la voie temporelle courante, c'est-à-dire est en phase avec le décodeur 112 de la base 1.

Une mémoire 53, commandée par le microprocesseur 50, contient un numéro de 0 à 23 représentant une voie temporelle de la trame, qui est affectée à l'embase 4 et donc affectée au combiné associé 6. Un comparateur 54 reçoit, d'un côté, les cinq bits du compteur 52 et, de l'autre, les cinq bits de numéro de voie temporelle en mémoire 53 pour, en cas de coïncidence, ouvrir une porte 55 reliée en entrée au fil 62 d'horloge bit et commandant l'avance du registre 43 d'émission sur le fil 63. Le registre de réception 44 est commandé, par une entrée d'horloge, selon le schéma exposé ci-dessus pour le registre d'émission 43. Dans un but de clarté, les circuits de commande correspondants n'ont pas été dessinés. Les circuits 52-55 et les circuits associés de la base 1 qui sont reliés au bus 60 permettent d'allouer cycliquement une voie temporelle, éventuellement plusieurs, à l'embase 4.

Le fonctionnement de l'ensemble des circuits des figures 4 et 5 va maintenant être expliqué plus en détails.

D'une façon générale, et comme indiqué plus haut, les circuits 40-46, 49-55 de l'embase 4 coopèrent avec les circuits de la figure 4 de la base 1 pour transférer une communication cellulaire entrante du combiné 6 jusqu'à la base 1 et pour asservir les circuits concernés de la base 1 sur la fréquence de fonctionnement du réseau cellulaire 8. Les terminaux 2, 3 auxquels la base 1 retransfère la communication sont de même asservis en fréquence sur le réseau cellulaire, à travers la base 1. Comme il s'agit de communications bidirectionnelles, ces asservissements agissent sur les deux sens de communication. Il en est de même pour les communications sortantes, d'un terminal 2, 3 vers un réseau 8, 9.

On rappellera tout d'abord que la transmission des signaux de la bande phonique des fréquences vocales, dans le réseau local DECT et dans les réseaux cellulaires 8, 9, s'effectue sous forme numérique. Les signaux phoniques analogiques, vocaux ou autres, sont d'abord numérisés par échantillonnage, en sortie du microphone des terminaux et des combinés, et, en réception, la reconversion en analogique des signaux phoniques numériques intervient juste avant leur transmission au haut-parleur de restitution de ceux-ci.

Bien que les différents réseaux cellulaires 8, 9 aient chacun une fréquence de transmission (modulation de la porteuse) qui lui est propre, les bits de signal vocal correspondent cependant à un échantillonnage à une fréquence, ou finesse d'échantillonnage, qui est commune à tous les réseaux et dont la valeur nominale de consigne est de 8 kHz. Cela permet de transmettre des signaux phoniques depuis les basses fréquences jusqu'à presque 4 kHz, donc sans trop dégrader la qualité de la voix. Pour chaque voie de communication, chaque réseau 8, 9 transmet, à intervalles réguliers, des échantillons de parole dans des paquets de taille particulière au réseau et à une vitesse particulière, mais l'ensemble de ces paramètres de transmission est choisi de façon telle que, compte tenu d'une compression dans le codage des échantillons, le flux moyen des échantillons de parole soit dans tous les cas à 8 kHz, comme cela a été évoqué plus haut.

Cependant la fréquence réelle d'échantillonnage est susceptible de différer légèrement de la valeur de consigne si bien que, si l'on établit une communication téléphonique entre un réseau cellulaire et un autre réseau, local ou cellulaire, l'un va présenter un débit différent de celui de l'autre. Cela va se traduire, à la restitution sonore, par un manque de bits si le réseau récepteur des bits est le plus rapide et par une perte de bits dans le cas contraire. Dans les deux cas, cela se traduit par des claquements dans le haut-parleur, se produisant à intervalles réguliers.

Ce genre d'inconvénient est ici évité, comme expliqué ci-après. Dans le sens réception, du réseau cellulaire 8 vers la base 1, le combiné 6 fournit cycliquement des paquets de données numériques de phonie au registre 41, qu'il commande par l'horloge CK41 à fréquence asservie sur la fréquence d'échantillonnage, à 8 kHz, du réseau 8. Le microprocesseur 50 détecte l'activation de l'horloge CK41 et donc la fourniture d'un paquet de données qui vient juste d'être reçu, à travers le réseau 8, par le combiné 6. Le microprocesseur 50 commande alors le registre horodateur 51 pour y mémoriser une valeur des circuits d'horloge 40 représentant l'instant courant, c'est-à-dire spécifiant l'instant d'arrivée du paquet de données. Du fait de l'asservissement en fréquence de l'oscillateur 401 sur le réseau 8, il s'agit donc d'un temps "réseau cellulaire 8".

Une fois le paquet rangé dans le registre 41, il est transmis au circuit 42 de décompression, qui fournit une suite correspondante d'échantillons de signal phonique représentant les valeurs prises successivement à intervalles de 125 μs par ce dernier pendant une durée déterminée, c'est-à-dire échantillonnées à 8 kHz. Le circuit de décompression 42 fournit en outre un nombre représentant le nombre N d'échantillons ainsi restitués, c'est-à-dire la durée (N-1) x 125 μs de la portion du signal phonique considéré. Le registre d'émission 43 reçoit alors, du circuit de décompression 42, les données utiles, constituées des N valeurs d'échantillons, et reçoit aussi le nombre N et la valeur horodatrice contenue dans le registre 51.

Lorsqu'arrive l'instant de la voie temporelle qui a été affecté à l'embase 4 par la base 1, à travers une voie de signalisation, de la trame, reçue par le microprocesseur 50 par une liaison non représentée, le comparateur 54 libère l'avance du registre 43, qui se vide dans le registre de réception 113 de la base 1, lui-même débloqué par le décodeur 112 commandé par les compteurs 104.

Le registre de réception 113 est ensuite vidé dans les mémoires tampons 114, 115, 116 pour y ranger respectivement les N échantillons de parole, la valeur horodatrice issue du registre 51 et le nombre N représentant indirectement la durée de signal utile de parole.

Le bloc de calcul 119 lit les mémoires 115 et 116, les N échantillons en mémoire tampon 114 étant quant à eux lus successivement par le multiplexeur 122, pour être émis par l'émetteur radio 123 vers l'un des terminaux 2, 3 dans une voie temporelle affectée au terminal 2, 3, sous la commande du décodeur 112 de voies temporelles. Cette émission radio, dans le réseau local, des N échantillons s'effectue à une fréquence bit qui est asservie par les circuits d'horloge 200 sur la fréquence, de valeur nominale 8 kHz, qui est effectivement celle du réseau cellulaire 8 ayant fourni ces échantillons, comme expliqué plus loin.

En pratique, les échantillons de signaux phoniques, sous forme d'octets représentant l'amplitude du signal échantillonné à 8 kHz, donc toutes les 125 μs, ne sont pas transmis à 8 kHz (64 kb/s) vers le terminal 2, 3. En effet, on ne dispose que de 1 voie temporelle sur 24, ce qui contraint à émettre 24 fois plus vite. Par ailleurs, on peut prévoir de coder différemment ces échantillons pour par exemple réduire de moitié, à 32 kb/s, le débit. Dans tous les cas, il faut cependant asservir la fréquence de transmission, dans la voie temporelle du réseau local, sur celle du réseau cellulaire 8, 9.

Pour cela, le bloc de calcul 119 détermine une durée de temps local de transfert d'un volume déterminé de données d'un paquet vers l'un des terminaux 2, 3 sous la commande des circuits d'horloge locale 200, pour calculer la durée, de temps de réseau cellulaire 8, représentée par la différence entre les données horodatrices du paquet considéré et celles du suivant, et pour asservir les circuits d'horloge locale 200 d'après l'écart entre les deux durées.

Le bloc de calcul 119, en pratique constitué d'un circuit qui est intégré dans le microprocesseur 110 et utilisé en partage de temps pour toutes les embases 4, 5, reçoit le signal d'horloge H commandant le compteur 121 et avec lui le multiplexeur 122, signal d'horloge H qui représente la vitesse de fourniture et donc de restitution sonore des données utiles dans le terminal 2, 3.

Lorsqu'un bloc de données utiles vient d'être lu par le multiplexeur 122, le bloc de calcul 119 commande, par chargement parallèle d'une valeur de décalage initial, ou pointeur d'adresse, dans le compteur 121, l'enchaînement immédiat de la lecture du début du bloc suivant de données utiles en mémoire 114, afin d'éviter toute coupure dans la restitution sonore. Le bloc de calcul 119, recevant des circuits d'horloge 200 le signal d'horloge H, qui représente la vitesse d'écoulement du temps local propre à la voie temporelle considérée reliant la base 1 à l'embase 4, détecte les instants de passage de la lecture d'un paquet au suivant par comptage des impulsions H (ou par lecture de l'état global, horodateur, des circuits d'horloge 200). Le bloc 119 mesure ainsi, dans le temps local des circuits d'horloge asservis 200, le temps mis par ceux-ci pour lire les données utiles de volume 8 N bits, en mémoire 114, du paquet qui vient d'être lu.

Par ailleurs, le bloc de calcul 119 soustrait, de la nouvelle valeur horodatrice en mémoire 115 du paquet qui va être lu, la valeur horodatrice du paquet précédent. Le bloc de calcul 119 dispose ainsi d'une mesure de la vitesse d'écoulement du temps dans le réseau cellulaire 8 puisque ces deux valeurs horodatrices sont séparées de N x 125 µs dans le réseau cellulaire 8. Par comparaison entre ces deux mesures, du temps réel, local, de lecture d'un volume déterminé 8N d'échantillons et du temps "réseau externe 8" égal à N x 125 µs séparant à l'origine les deux échantillons de début des deux paquets successifs, le bloc de calcul 119 détermine un pourcentage d'erreur de fréquence des circuits d'horloge 200 et commande ceux-ci pour annuler cette erreur. Le temps local relatif à la durée de lecture des 8 N échantillons par les circuits d'horloge 200 est divisé par le temps "réseau cellulaire 8" homologue obtenu par calcul de la différence des valeurs horodatrices et l'écart à 1 du quotient ainsi obtenu représente l'erreur relative de fréquence des circuits d'horloge 200.

La fréquence de retransmission, vers les terminaux 2, 3 du réseau local, des signaux utiles provenant du réseau cellulaire 8 est ainsi asservie, ou calée, sur la fréquence effective utilisée dans celui-ci pour le codage par échantillonnage du signal phonique. On évite ainsi tout glissement de fréquence entre réseaux externe et local. Compte tenu de la faiblesse du glissement envisageable, il peut être prévu de ne transmettre les signaux horodateurs que dans certains paquets, par exemple toutes les 20 ms.

La transmission de données numériques en sens opposé, depuis le terminal 2, 3 jusqu'au connecteur 49 est de même synchronisée par les circuits d'horloge 200. Comme indiqué, dans un but de clarté, le détail des circuits correspondants n'a pas été représenté.

Comme expliqué, les circuits décrits ci-dessus concernent chacun une voie temporelle définie par le circuit d'horloge maître 100 de la base 1. Une voie temporelle est donc une fenêtre qui s'ouvre à un rythme trame fixe et dans laquelle les communications peuvent être transmises à une fréquence bit asservie sur les réseaux extérieurs 8, 9. Il pourrait cependant être prévu que les circuits d'horloge maître 100 soient eux aussi asservis en fréquence, mais sur un seul réseau téléphonique externe, pouvant éventuellement, au cours du temps, être remplacé par un autre pour cette fonction.

En variante, la base 1 peut asservir en fréquence la transmission des bits dans ses voies temporelles sur les réseaux cellulaires 8, 9 sans utiliser des données horodatrices. En pareil cas, le bloc de calcul 119 surveille le niveau de remplissage de la mémoire tampon 114 et asservit en fréquence les circuits d'horloge locale 200 en fonction du niveau surveillé. Le bloc de calcul 119 détecte l'état vide de la mémoire tampon 114 (débordement de capacité négatif) et son état plein, de débordement, pour respectivement ralentir et accélérer les circuits d'horloge 200. Pour une régulation de fréquence plus précise, le bloc de calcul 119 lit la mémoire 116 indiquant les volumes 8N de données utiles du ou des paquets en mémoire tampon 114 et retranche, au total des nombres 8N ci-dessus, le nombre d'impulsions de lecture du paquet de données utiles en cours de retransmission vers le terminal 2, 3, qui ont déjà été engendrées par le circuit d'horloge 200. Le nombre de bits ainsi obtenu, représentant le contenu non encore lu, ou la réserve de bits, de la mémoire 114 est donc décrémenté d'une unité à chaque impulsion des circuits d'horloge 200 commandant le compteur de lecture 121 et incrémenté d'un nombre 8N, pouvant varier d'un paquet à l'autre, à chaque réception de paquet dans la mémoire 114.

Dans une autre variante de réalisation, la compression/décompression de la voix, à la norme prévue par le réseau cellulaire 8, 9, peut être prévue dans la base 1 elle-même, les circuits 42 et 45 y étant alors déportés. De même encore, il peut être prévu d'utiliser à cet effet les circuits correspondants normalement prévus dans les combinés 6, 7.

Le microprocesseur 110 de la base 1 a en mémoire la configuration du réseau local, c'est-à-dire est informé de la présence d'un combiné 6, 7 dans une embase 4, 5. Le microprocesseur 50 détecte la présence du combiné 6 grâce ici à un contact polarisé, non représenté, (résistance de tirage à la tension d'alimentation), qui change d'état lorsqu'il est relié à une sortie du combiné 6, par exemple celle alimentant en données ou en signal d'horloge CK41 le registre 41. Le microprocesseur 50 émet alors une signalisation vers la base 1, à travers la voie de signalisation évoquée plus haut, pour indiquer la présence du combiné 6 ou pour indiquer qu'il vient d'être retiré.

Le combiné 6 communique au microprocesseur 110, par les circuits 41-43, commandés par les circuits 52-55 de sélection de voie temporelle du bus 60, des données d'identification du combiné 6, comme le contenu, tel que le numéro, de la carte SIM reçue dans un lecteur du combiné 6, le numéro de série de la puce du combiné GSM 6 ou encore le code PIN fourni par l'utilisateur. Le microprocesseur 110 de la base 1 peut alors, après réception des données d'identification, lancer un appel sur la ligne RTC 66 pour atteindre un centre de gestion du réseau GSM 8, afin de commander le reroutage des appels cellulaires entrants destinés au combiné 6, vers le RTC et, à travers lui, vers la base 1, qui a préalablement fourni son numéro d'appel RTC. Ceci est aussi valable pour le réseau 9. Les terminaux 2, 3 se substituent ainsi aux combinés 6, 7, ce qui permet de diffuser une sonnerie d'appel sur tous les terminaux 2, 3.

En l'absence d'un tel renvoi au niveau du réseau externe 8, 9, l'appel entrant provenant d'un des réseaux cellulaires 8, 9 arrive sur le combiné 6, 7 et est de même renvoyé, par le bus 60, jusqu'aux terminaux 2, 3.

Pour un appel sortant, l'utilisateur d'un des terminaux 2, 3 peut choisir le RTC 66, ou l'un des réseaux cellulaires 8 et 9, puisque le code PIN voulu a été reçu par la base 1 et que le combiné 6, 7 peut donc être déverrouillé par celle-ci. De préférence, il choisira d'appeler son correspondant extérieur directement sur le réseau téléphonique cellulaire 8, 9 spécifique de celui-ci afin d'éviter les coûts d'interconnexion entre réseaux.

**Revendications**

1. Réseau téléphonique local comportant une base (1), reliée à des terminaux (2, 3) téléphoniques du réseau local et agencée pour être reliée au réseau téléphonique commuté (66), et des embases (4, 5), de réception de combinés téléphoniques (6, 7) de divers réseaux numériques de téléphonie cellulaire (8, 9) à débit déterminé, réseau local dans lequel la base (1) est reliée aux embases (4, 5) par des liaisons numériques (60) à débit déterminé et la base (1) et les embases (4, 5) comportent des moyens (100, 110, 112-116, 119, 121-126, 200; 11-16; 20-26; 40-46, 49-55) pour transférer à travers la base (1) une communication d'un réseau cellulaire (8, 9) au réseau local et inversement, les moyens de transfert de la base (100, 110, 112-116, 119, 121-126, 200) et des embases (11-15, 20-26; 40-46, 49-55) étant agencés pour adapter la transmission des signaux de communication dans l'un des deux réseaux (1-5; 8, 9) en fonction du débit de l'autre réseau (8, 9 ; 1-5).

2. Réseau selon la revendication 1, dans lequel les moyens de transfert (100, 110, 112-116, 119, 121-126, 200, 40-46, 49-55) sont agencés pour asservir le débit d'une des liaisons numériques (60), reliant la base (1) à une embase (4, 5), sur le débit du réseau cellulaire (8, 9) du combiné de l'embase (4, 5).

3. Réseau selon l'une des revendications 1 et 2, dans lequel les moyens de transfert des embases (40-46, 49-55) comportent des moyens horodateurs (40, 51) agencés pour associer, à des paquets de données provenant d'un combiné (6, 7), des données horodatrices spécifiant un instant d'arrivée du paquet et les moyens de transfert de la bande (100, 110, 112-116, 119, 121-126, 200) sont agencés pour s'asservir en fréquence à partir des données horodatrices.

4. Réseau selon la revendication 3, dans lequel les moyens de transfert de la base (100, 110, 112-116, 119, 121-126, 200) comportent des circuits de calcul (119) agencés pour déterminer une durée de temps local de transfert d'un volume déterminé de données d'un paquet vers l'un des terminaux (2, 3) sous la commande de circuits d'horloge locale (200), pour calculer la durée, de temps de réseau cellulaire (8, 9), représentée par la différence entre les données horodatrices du paquet considéré et celles du suivant, et pour asservir les circuits d'horloge locale (200) d'après l'écart entre les deux durées.

5. Réseau selon l'une des revendications 1 à 4, dans lequel les moyens de transfert (100, 110, 112-116, 119, 121-126, 200) de la base (1) comprennent des circuits de calcul (119) agencés pour surveiller le niveau de remplissage d'une mémoire tampon (114) de réception de paquets des réseaux cellulaires (8, 9) et pour asservir en fréquence, en fonction dudit niveau, des circuits d'horloge locale (200).

6. Réseau selon la revendication 1, dans lequel les moyens de transfert (40-46, 49-55) des embases (4, 5) sont agencés pour adapter les signaux de communication reçus d'un des deux réseaux, local et cellulaire (1-5; 8, 9), en fonction du débit de l'autre réseau (8, 9; 1-5).

7. Réseau selon la revendication 6, dans lequel les moyens de transfert (11-16, 20-26) des embases (4, 5) comportent

   - des moyens (11, 15-16, 21, 25-26) d'échange des mots de code avec les deux réseaux (1-5; 8, 9), associés à des moyens (13, 23) de mémorisation des mots de code,
   - des moyens horodateurs (10, 12, 14, 22, 24) agencés pour saisir les instants de réception des mots de code et constituer ainsi deux suites de valeurs horodatrices (ti, ti+1, tj), et
   - des moyens de calcul numérique (20) agencés pour lire les valeurs horodatrices (ti, ti+1, tj) pour déterminer la position temporelle relative de chacune (tj) par rapport à deux autres (ti, ti+1) situées temporellement de part et d'autre dans l'autre suite, pour, d'après ladite position, calculer une valeur d'échantillon intermédiaire (Ej) par interpolation des deux mots de code de part et d'autre (Ei, Ei+1) dans ladite autre suite et pour transmettre la valeur d'échantillon intermédiaire (Ej) au réseau (8, 9) relatif à la valeur horodatrice (tj) considérée, à travers les moyens d'échange (25-26).

8. Réseau selon la revendication 1, dans lequel les moyens de transfert (11-16, 20-26) des embases (4, 5) sont agencés pour émettre, vers le réseau cellulaire (8, 9), des commandes de régulation d'émissions de paquets de données provenant dudit réseau (8, 9).

9. Réseau selon l'une des revendications 1 à 8, dans lequel les moyens de transfert (40-46, 49-55) des embases (4, 5) sont agencés pour retransmettre, à des moyens (110) de gestion du réseau local de la base (1), des données d'identification des combinés (6, 7).

10. Réseau selon la revendication 9, dans lequel les moyens de gestion (110) sont agencés pour, après réception des données d'identification, lancer, vers des centres de gestion des réseaux cellulaires (8, 9), des appels téléphoniques de commande de reroutage des appels cellulaires entrants vers le réseau téléphonique filaire (66).

FIGURE 1

FIGURE 2

FIGURE 3

FIGURE 4

EP 1 065 902 A1

FIGURE 5

**Office européen des brevets**

**RAPPORT DE RECHERCHE EUROPEENNE**

Numéro de la demande

EP 00 40 1782

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 592 209 A (NIPPON STEEL CORP) 13 avril 1994 (1994-04-13) * page 2, ligne 50 - ligne 55 * --- | 1,2,6 | H04Q7/30 H04B7/26 |
| X | EP 0 849 965 A (PLUS MOBILFUNK GMBH E) 24 juin 1998 (1998-06-24) * colonne 4, ligne 1 - ligne 21 * --- | 1,2 | |
| P,X | EP 0 952 688 A (SIEMENS AG OESTERREICH) 27 octobre 1999 (1999-10-27) * le document en entier * --- | 1,2,6 | |
| A | US 5 586 119 A (SCRIBANO V ET AL) 17 décembre 1996 (1996-12-17) * colonne 3, ligne 60 - colonne 4, ligne 6 * --- | 3,7 | |
| A | US 5 473 668 A (NAKAHARA ) 5 décembre 1995 (1995-12-05) * colonne 4, ligne 18 - ligne 53 * --- | 1,2,6,8 | |
| A | WO 97 04545 A (HUEBL MARKUS ;SIEMENS AG (DE)) 6 février 1997 (1997-02-06) * page 5, ligne 30 - page 6, ligne 27 * ----- | 1-3,6-8 | DOMAINES TECHNIQUES RECHERCHES (Int.Cl.7) H04H H04B H04J H04Q H04M |

Le présent rapport a été établi pour toutes les revendications

| Lieu de la recherche | Date d'achèvement de la recherche | Examinateur |
|---|---|---|
| BERLIN | 16 octobre 2000 | Palencia Gutiérrez,C |

EPO FORM 1503 03.82 (P04C02)

**EP 1 065 902 A1**

ANNEXE AU RAPPORT DE RECHERCHE EUROPEENNE
RELATIF A LA DEMANDE DE BREVET EUROPEEN NO.

EP 00 40 1782

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-10-2000

| Document brevet cité au rapport de recherche | | Date de publication | Membre(s) de la famille de brevet(s) | | Date de publication |
|---|---|---|---|---|---|
| EP 0592209 | A | 13-04-1994 | CA | 2107606 A | 08-04-1994 |
| | | | JP | 7283772 A | 27-10-1995 |
| | | | US | 5537685 A | 16-07-1996 |
| | | | US | 5613211 A | 18-03-1997 |
| EP 0849965 | A | 24-06-1998 | AUCUN | | |
| EP 0952688 | A | 27-10-1999 | AT | 66398 A | 15-03-2000 |
| US 5586119 | A | 17-12-1996 | CA | 2174763 A | 07-03-1996 |
| | | | CN | 1134768 A | 30-10-1996 |
| | | | FI | 961838 A | 30-04-1996 |
| | | | IL | 114455 A | 30-10-1998 |
| | | | JP | 9504935 T | 13-05-1997 |
| | | | KR | 228470 B | 01-11-1999 |
| | | | SE | 9601585 A | 25-06-1996 |
| | | | WO | 9607252 A | 07-03-1996 |
| US 5473668 | A | 05-12-1995 | JP | 7087558 A | 31-03-1995 |
| WO 9704545 | A | 06-02-1997 | EP | 0840962 A | 13-05-1998 |
| | | | US | 5943383 A | 24-08-1999 |

EPO FORM P0460

Pour tout renseignement concernant cette annexe : voir Journal Officiel de l'Office européen des brevets, No.12/82